# EUROPEAN PATENT APPLICATION

(11) **EP 4 716 128 A1**
(43) Date of publication of application: **25.03.2026**
(21) Application number: 23936937.4
(22) Date of filing: 15.05.2023
(51) Int. Cl.: H04L 1/18, H04W 36/08

(54) **QOS DATA FRAME TRANSMISSION METHOD, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/094300
(87) International publication number: WO 2024/234250

(57) **Abstract**

Embodiments of the present disclosure relate to the technical field of mobile communications, and provide a quality of service (QoS) data frame transmission method, an electronic device and a storage medium. The QoS data frame transmission method is applied to a receiving end. The method comprises: determining transmission parameters of a QoS data frame, wherein the transmission parameters are accumulated transmission parameters of a station device STA before switching from a first AP to a second AP, or the transmission parameters are re-counted after switching from the first AP to the second AP; and receiving the QoS data frame according to the transmission parameters. The embodiments of the present disclosure provide a transmission mode of a QoS data frame.

## Description

### TECHNICAL FIELD

Embodiments of the present disclosure relate to the field of mobile communication technology, and in particular, to a method for transmitting a QoS data frame, an electronic device and a storage medium.

### BACKGROUND

With the continuous advancement of Wi-Fi technology, the next-generation Wi-Fi technology, i.e., Ultra High Reliability (UHR), has been proposed. In UHR, a Station (STA) may transition from one Access Point (AP) or Access Point Multi-Link Device (AP MLD) to another AP (or AP MLD). Consequently, a method for transmitting a Quality of Service (QoS) data frame is required to support STA transitioning.

### SUMMARY

Embodiments of the present disclosure provide a method for transmitting a QoS data frame, an electronic device and a storage medium, so as to provide a manner in which the QoS data frame is transmitted.

An aspect of embodiments of the present disclosure provides a method for transmitting a QoS data frame applied to a receiving end, including:
determining a transmission parameter of the QoS data frame, wherein the transmission parameter accumulates a transmission parameter used before a station (STA) transitions from a first AP to a second AP, or restarts counting after the STA transitions from the first AP to the second AP; and
receiving the QoS data frame based on the transmission parameter.

Another aspect of embodiments of the present disclosure further provides a method for transmitting a QoS data frame applied to a sending end, including:
resending a QoS data frame after a station (STA) transitions from a first AP to a second AP, wherein a transmission parameter of the QoS data frame accumulates a transmission parameter used before the STA transitions from the first AP to the second AP, or restarts counting after the STA transitions from the first AP to the second AP.

Another aspect of embodiments of the present disclosure further provides a method for transmitting a QoS data frame applied to a first AP, including:
after a station (STA) transitions from a first AP to a second AP, sending a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

Another aspect of embodiments of the present disclosure further provides an electronic device which is a receiving end, and the electronic device includes:
a determining module, configured to determine a transmission parameter of a QoS data frame, wherein the transmission parameter accumulates a transmission parameter used before a station (STA) transitions from a first AP to a second AP, or restarts counting after the STA transitions from the first AP to the second AP; and
a receiving module, configured to receive the QoS data frame based on the transmission parameter.

Another aspect of embodiments of the present disclosure further provides an electronic device which is a sending end, and the electronic device includes:
a transmitting module, configured to resend a QoS data frame after a station (STA) transitions from a first AP to a second AP, wherein a transmission parameter of the QoS data frame accumulates a transmission parameter used before the STA transitions from the first AP to the second AP, or restarts counting after the STA transitions from the first AP to the second AP.

Another aspect of embodiments of the present disclosure further provides an electronic device which is a first AP, and the electronic device includes:
a sending module, configured to, after a station (STA) transitions from a first AP to a second AP, send a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

Embodiments of the present disclosure further provide an electronic device including a memory, a processor, and a computer program stored on the memory and executable on the processor, and the processor, when executing the program, implements the method according to one or more of embodiments of the present disclosure.

Embodiments of the present disclosure further provide a computer-readable storage medium having a computer program stored thereon, and the computer program, when executed by a processor, implements the method according to one or more of embodiments of the present disclosure.

In the embodiments of the present disclosure, the receiving end determines the transmission parameter of the QoS data frame, in which the transmission parameter accumulates the transmission parameter used before the STA transitions from the first AP to the second AP, or restarts counting after the STA transitions from the first AP to the second AP; and receives the QoS data frame based on the transmission parameter. The embodiments of the present disclosure provide a method for transmitting a QoS data frame which supports STA transitioning and meets transmission requirements of UHR.

Additional aspects and advantages of the embodiments of the present disclosure will be partially provided in the following description, and will partially become apparent from the following description or be learned through practice of the present disclosure.

### BRIEF DESCRIPTION OF THE DRAWINGS

In order to more clearly illustrate the technical solutions of the embodiments of the present disclosure, the accompanying drawings, which are to be used in the description of the embodiments of the present disclosure, will be briefly introduced below. Obviously, the accompanying drawings in the following description are only some of the embodiments of the present disclosure, and a person skilled in the art may obtain other drawings based on these drawings without creative labor.
FIG. 1 is an application scenario diagram of an embodiment of the present disclosure;
FIG. 2 is another application scenario diagram of an embodiment of the present disclosure;
FIG. 3 is a flowchart of a method for transmitting a QoS data frame provided by an embodiment of the present disclosure;
FIG. 4 is another flowchart of a method for transmitting a QoS data frame provided by an embodiment of the present disclosure;
FIG. 5 is further another flowchart of a method for transmitting a QoS data frame provided by an embodiment of the present disclosure;
FIG. 6 is a structural schematic diagram of an electronic device provided by an embodiment of the present disclosure;
FIG. 7 is another structural schematic diagram of an electronic device provided by an embodiment of the present disclosure;
FIG. 8 is further another structural schematic diagram of an electronic device provided by an embodiment of the present disclosure; and
FIG. 9 is yet another structural schematic diagram of an electronic device provided by an embodiment of the present disclosure.

### DETAILED DESCRIPTION

Exemplary embodiments will be described in detail herein, examples of which are shown in the accompanying drawings. When the following description relates to the accompanying drawings, unless otherwise indicated, the same reference numbers in different drawings indicate the same or similar elements. The implementations described in the following exemplary embodiments do not represent all implementations consistent with the present disclosure. Rather, they are merely examples of devices and methods consistent with some aspects of the present disclosure as detailed in the appended claims.

The term used in the embodiments of the present disclosure is only for describing a particular embodiment and is not intended to limit the present disclosure. The singular forms such as "a", "an", "said" and "the" used in the present disclosure and the appended claims are also intended to encompass plural forms, unless clearly indicated otherwise herein. It is also to be understood that the term "and/or" as used herein refers to and encompasses any or all possible combinations of one or more of the associated listed items. For example, A and/or B may indicate three cases, i.e., A alone, both A and B, and B alone. The character "/" generally indicates that the associated objects before and after the character are in an "or" relationship. The term "a plurality of ......" refers to two or more, in view of which "a plurality of ......" in the embodiments of the present disclosure can be understood as "at least two of ......".

It is to be understood that while the terms first, second, third or the like may be used in the present disclosure to describe various information, such information may not be limited by these terms. These terms are used only to distinguish the same type of information from one another. For example, without departing from the scope of the present disclosure, first information may also be referred to as second information, and similarly, second information may be referred to as first information. Depending on the context, for example, the term "if" as used herein may be interpreted as "while ......" or "when ......" or "in response to determining ......".

The technical solution in the embodiments of the present disclosure will be described clearly and completely hereinafter in conjunction with the accompanying drawings in the embodiments of the present disclosure. Obviously, the described embodiments are only a part but not all of the embodiments of the present disclosure. Based on the embodiments in the present disclosure, all other embodiments obtained by a person skilled in the art without making creative labor fall within the protection scope of the present disclosure.

Embodiments of the present disclosure provides a method for transmitting a QoS data frame, an electronic device and a storage medium so as to provide a transmission manner for the QoS data frame.

The method and device are based on the same inventive concept. As the principles for solving problems are similar in the method and device, the implementations of the device and method may refer to each other, and repetitions thereof are omitted.

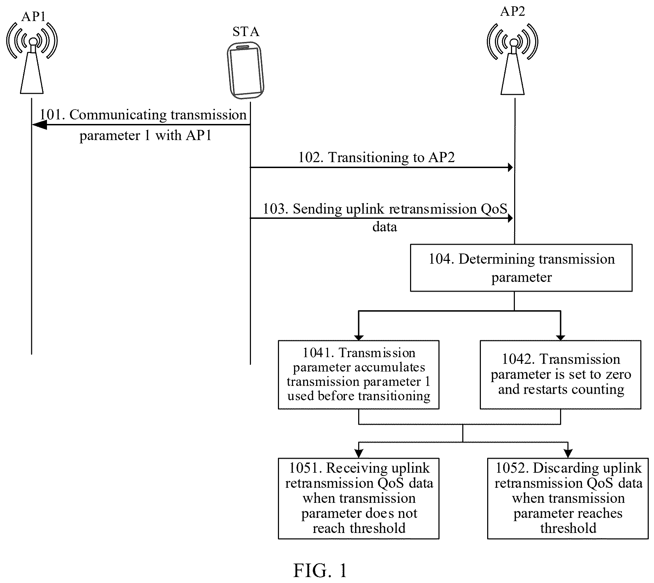

Referring to FIG. 1, it illustrates an application scenario diagram of a method for transmitting a QoS data frame provided by various embodiments of the present disclosure. Optionally, a station (STA), such as an electronic device with a wireless network access function, provides a frame delivery service to facilitate information transmission. An access point (AP), such as a device with a wireless-to-wired bridging function, is responsible for extending a service provided by a wired network to a wireless network.

In FIG. 1, for example, QoS data is uplink data, a sending end is an STA, and a receiving end is a second AP (AP2). As shown in 101 to 102, when the STA communicates with a first AP (AP1), it may need to transition to the second AP (AP2). For example, when the communication status between the AP1 and the STA is poor, seamless transitioning to AP2 for communication enables uninterrupted data transmission.

During this transitioning process, retransmission (retry) of the QoS data may occur. As the QoS data frame does not require Block ACK (BA) message frame for confirmation, a transmission parameter is necessary to verify the transmission status of the QoS data.

Optionally, in an embodiment of the present disclosure, the transmission parameter may include, for example, a retry count of the QoS data frame, a count of a MSDU (MAC Service Data Unit) timer, and/or a lifetime of the QoS data frame. The retry count represents the number of retries of the QoS data frame. For example, a preset retry count threshold for the QoS data frame may be 5. When the retry count is below five, the AP2 buffers the received QoS data, and when the retry count reaches 5, the AP2 may discard the buffered QoS data.

For example, the MSDU timer starts counting when the MSDU is transmitted to the Media Access Control (MAC) layer. For example, the count threshold of the MSDU timer may be a value specified in the dot11 EDCA Table MSDU Lifetime parameter, and if the transmission MSDU timer reaches the dot11 EDCA Table MSDU Lifetime, the MSDU (QoS data) or any undelivered segments of that MSDU may be discarded.

For example, the lifetime of the QoS data frame records the lifetime duration of the QoS data frame, and it may be for example 50 milliseconds. Timing starts upon transmission initiation of the QoS data frame, and if it exceeds the lifetime duration of the QoS data frame, the AP2 may discard the buffered QoS data.

In 103, the STA sends uplink retransmission QoS data with an unchanged sequence number (SN).

In 104, the AP2 receives the uplink retransmission QoS data and determines the transmission parameter of the uplink retransmission QoS data. Specifically, this determination of the transmission parameter involves the following two situations:
1041: the transmission parameter accumulates the transmission parameter 1 used prior to the STA transitioning from the AP1 to the AP2; and
1042: the transmission parameter is reset to zero and restarts counting.

In 1041, the transmission parameter 1 starts calculation since the STA sends the QoS data to the AP1. The AP1 may sends the transmission parameter 1 to the AP2 via a signaling messages.

For example, the MSDU timer starts upon the STA sending the QoS data to the AP1. If the MSDU timer exceed the dot11 EDCA Table MSDU Lifetime or the dot11 QAP EDCA Table MSDU Lifetime, the AP2 discards this QoS data. Moreover, the retry count may be accumulated from the transmission to the AP1. The lifetime of the QoS data frame is also timed since the STA sends the QoS data to the AP1.

In 1042, the transmission parameter is reset to zero and restarts counting. That is, the MSDU timer is reset to zero and restarts calculation since the STA sends the QoS data to the AP2; the retry count is reset to zero and restarts accumulation since the STA sends the QoS data to the AP2; and the lifetime of the QoS data frame is also reset to zero and restarts accumulation since the STA sends the QoS data to the AP2.

Subsequently, the AP2 receives the uplink retransmission QoS data based on the transmission parameter. As illustrated in 1051, if the transmission parameter does not reach a threshold, the uplink retransmission QoS data is received. For example, if the retry count does not exceed a preset retry count threshold, the count of the MSDU timer does not exceed a preset timer count threshold, and the lifetime of the QoS data frame does not exceed a lifetime threshold, the QoS data frame is received and buffered.

In 1052, if the transmission parameter reaches the threshold, the uplink retransmission QoS data corresponding to that SN is discarded. For example, in at least one of the following situations: the retry count exceeds the preset retry count threshold, the count of the MSDU timer exceeds the preset timer count threshold, and the lifetime of the QoS data frame does not exceed the lifetime threshold, the QoS data frame is discarded.

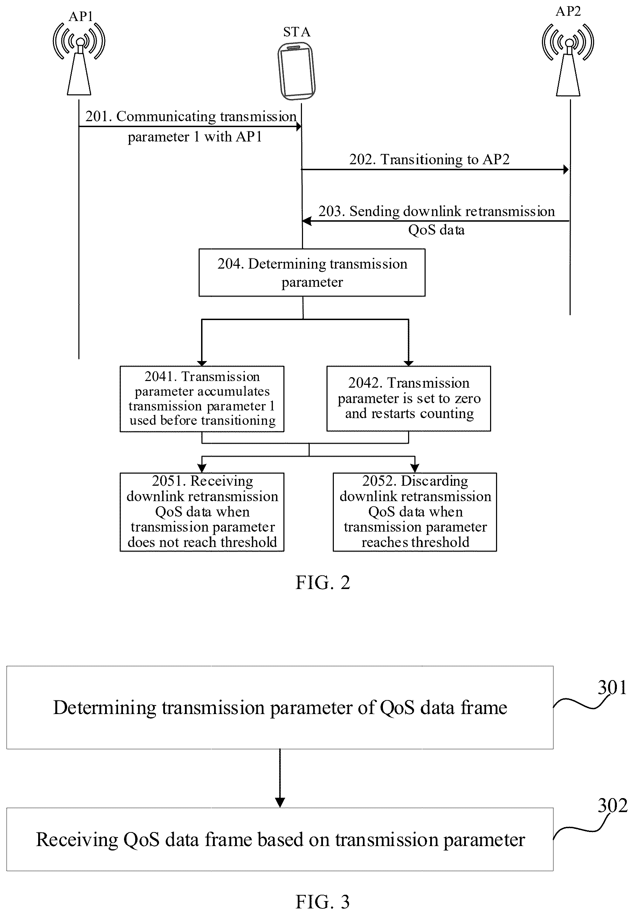

In FIG. 2, for example, the QoS data is downlink data, the sending end is the AP2, and the receiving end is the STA. As shown in 201 to 202, when the STA communicates with the first AP (AP1), it may need to transition to the second AP (AP2). In 203, the AP2 sends downlink retransmission QoS data with an unchanged sequence number (SN).

In 204, the STA receives the downlink retransmission QoS data and determines the transmission parameter of the downlink retransmission QoS data. Specifically, this determination of the transmission parameter involves the following two situations:
2041: the transmission parameter accumulates the transmission parameter 1 used prior to the STA transitioning from the AP1 to the AP2; and
2042: the transmission parameter is reset to zero and restarts counting.

In 2041, the transmission parameter 1 starts calculation since the AP1 sends the QoS data to the STA. The AP1 may sends the transmission parameter 1 to the AP2 via a signaling messages.

For example, the MSDU timer starts upon the AP1 sending the QoS data to the STA. If the MSDU timer exceed the dot11 EDCA Table MSDU Lifetime or the dot11 QAP EDCA Table MSDU Lifetime, the AP2 discards this QoS data. Moreover, the retry count may be accumulated since the AP1 sends the QoS data to the STA. The lifetime of the QoS data frame is also timed since the AP1 sends the QoS data to the STA.

In 2042, the transmission parameter restarts counting since the STA transitions from the first AP to the second AP. That is, the MSDU timer is reset to zero and restarts calculation since the AP1 sends the QoS data to the STA; the retry count is reset to zero and restarts calculation since the AP2 sends the QoS data to the STA; and the lifetime of the QoS data frame is also reset to zero and restarts timing.

Subsequently, the STA receives the downlink retransmission QoS data based on the transmission parameter. As shown in 2051, if the transmission parameter does not reach a threshold, the downlink retransmission QoS data is received. For example, if the retry count does not exceed a preset retry count threshold, the count of the MSDU timer does not exceed a preset timer count threshold, and the lifetime of the QoS data frame does not exceed a lifetime threshold, the QoS data frame is received and buffered.

In 2052, if the transmission parameter reaches the threshold, the downlink retransmission QoS data corresponding to that SN is discarded. For example, in at least one of the following situations: the retry count exceeds the preset retry count threshold, the count of the MSDU timer exceeds the preset timer count threshold, and the lifetime of the QoS data frame does not exceed the lifetime threshold, the QoS data frame is discarded.

Optionally, in an embodiment of the present disclosure, the AP and the STA may be devices supporting multi-connection, for example, which may be represented respectively as AP MLD and non-AP MLD. The AP MLD may represent an access point supporting multi-connection communication function, and the non-AP MLD may represent a station supporting multi-connection communication function. For illustrative purposes, the embodiments herein utilize AP and STA as examples, however, this does not constitute a limitation on the embodiments of the present disclosure.

Referring to FIG. 3, an embodiment of the present disclosure provides a method for transmitting a QoS data frame applied to a receiving end. As illustrated in FIG. 1, the QoS data frame includes an uplink QoS data frame, and the receiving end includes the second AP. alternatively as illustrated in FIG. 2, the QoS data frame includes a downlink QoS data frame, and the receiving end includes the STA.

The method includes step 301 of determining a transmission parameter of the QoS data frame.

The transmission parameter accumulates a transmission parameter used before a station (STA) transitions from a first AP to a second AP. As illustrated in 1041 in FIG. 1, the transmission parameter accumulates the transmission parameter 1 used prior to the STA transitioning from the AP1 to the AP2. For example, the MSDU timer starts upon the STA sending the QoS data; the retry count may be accumulated from the transmission to the AP1; and the lifetime of the QoS data frame is also timed since the STA sends the QoS data to the AP1.

Alternatively, as illustrated 2041 in FIG. 2, the MSDU timer starts upon the AP1 sending the QoS data to the STA; the retry count may be accumulated since the AP1 sends the QoS data to the STA; and the lifetime of the QoS data frame is also timed since the AP1 sends the QoS data to the STA.

The transmission parameter restarts counting after the STA transitions from the first AP to the second AP. As illustrated in 1042 in FIG. 1, the transmission parameter is reset to zero and restarts counting. That is, the MSDU timer is reset to zero and restarts calculation since the STA sends the QoS data to the AP2; the retry count is reset to zero and restarts accumulation since the STA sends the QoS data to the AP2; and the lifetime of the QoS data frame is also reset to zero and restarts accumulation since the STA sends the QoS data to the AP2.

Alternatively, as illustrated in 2042 in FIG. 2, the MSDU timer is reset to zero and restarts calculation since the AP1 sends the QoS data to the STA; the retry count is reset to zero and restarts calculation since the AP2 sends the QoS data to the STA; and the lifetime of the QoS data frame is also reset to zero and restarts timing.

The method includes step 302 of receiving the QoS data frame based on the transmission parameter.

Subsequentially, the receiving end receives the uplink retransmission QoS data based on the transmission parameter. As illustrated in 1051 in FIG. 1, if the transmission parameter does not reach a threshold, the uplink retransmission QoS data is received. Alternatively, as illustrated in 1052 in FIG. 1, if the transmission parameter reaches the threshold, the uplink retransmission QoS data is received.

In the embodiments of the present disclosure, the receiving end determines the transmission parameter of the QoS data frame, in which the transmission parameter accumulates the transmission parameter used before the STA transitions from the first AP to the second AP, or restarts counting after the STA transitions from the first AP to the second AP; and receives the QoS data frame based on the transmission parameter. The embodiments of the present disclosure provide a method for transmitting a QoS data frame which supports STA transitioning and meets transmission requirements of UHR.

Optionally, in an embodiment of the present disclosure, the transmission parameter includes a retry count of the QoS data frame, a count of a MSDU timer, and/or a lifetime of the QoS data frame.

Herein, the retry count represents the number of retries of the QoS data frame. For example, a preset retry count threshold for the QoS data frame may be 5. When the retry count is below five, the AP2 buffers the received QoS data, and when the retry count reaches 5, the AP2 may discard the buffered QoS data.

For example, the MSDU timer starts counting when the MSDU is transmitted to the MAC layer. For example, the count threshold of the MSDU timer may be a value specified in the dot11 EDCA Table MSDU Lifetime parameter, and if the transmission MSDU timer reaches the dot11 EDCA Table MSDU Lifetime, the MSDU (QoS data) or any undelivered segments of that MSDU may be discarded.

For example, the lifetime of the QoS data frame records the lifetime duration of the QoS data frame, and it may be for example 50 milliseconds. Timing starts upon transmission initiation of the QoS data frame, and if it exceeds the lifetime duration of the QoS data frame, the AP2 may discard the buffered QoS data.

Optionally, in an embodiment of the present disclosure, the transmission parameter accumulates the transmission parameter used before the STA transitions from the first AP to the second AP, and determining the transmission parameter of the QoS data frame includes:
receiving, from the first AP, a parameter used before the STA transitions from the first AP to the second AP.

In the case where the transmission parameter accumulates the transmission parameter used before the STA transitions from the first AP to the second AP, the AP1 may send transmission parameter used before the STA transitions from the first AP to the second AP (i.e., the transmission parameter for the first AP transmitting the QoS data frame) to the receiving end. The receiving end receives the parameter prior to transitioning to the second AP sent by the first AP, and determines a transmission parameter after transitioning based on the received parameter.

Optionally, in an embodiment of the present disclosure, receiving the QoS data frame based on the transmission parameter includes:
discarding the QoS data frame when the retry count exceeds a preset retry count threshold, the count of the MSDU timer exceeds a preset timer count threshold, and/or the lifetime of the QoS data frame exceeds a lifetime threshold.

If the transmission parameter reaches the threshold, the receiving end discards the retransmission QoS data. For example, in at least one of the following situations: the retry count exceeds the preset retry count threshold, the count of the MSDU timer exceeds the preset timer count threshold, and the lifetime of the QoS data frame does not exceed the lifetime threshold, the retransmission QoS data frame corresponding to SN is discarded.

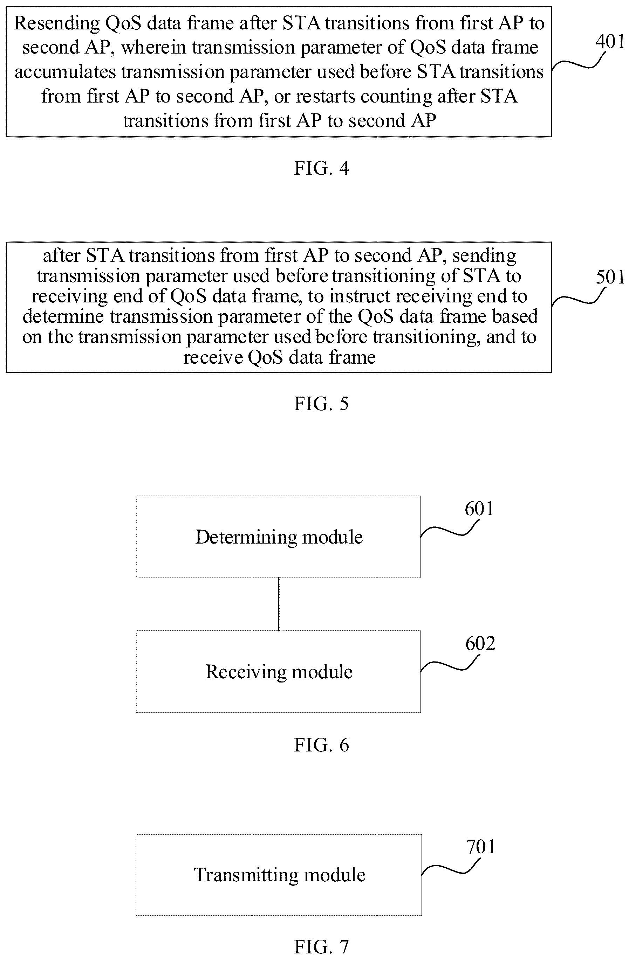

Referring to FIG. 4, an embodiment of the present disclosure provides a method for transmitting a QoS data frame applied to a sending end, optionally, the method may be applied to a sending end. As illustrated in FIG. 1, the QoS data frame includes an uplink QoS data frame, and the sending end includes the STA.

Alternatively, as illustrated in FIG. 2, the QoS data frame includes a downlink QoS data frame, and the sending end includes the second AP.

The method may include:
step 401, resending a QoS data frame after a station (STA) transitions from a first AP to a second AP, wherein a transmission parameter of the QoS data frame accumulates a transmission parameter used before the STA transitions from the first AP to the second AP, or restarts counting after the STA transitions from the first AP to the second AP.

After the STA transitions from the first AP to the second AP, the sending end resends the QoS data frame, and the transmission parameter accumulates the transmission parameter used before the STA transitions from the first AP to the second AP. As illustrated in 1041 in FIG. 1, the transmission parameter accumulates the transmission parameter 1 used prior to the STA transitioning from the AP1 to the AP2. For example, the MSDU timer starts upon the STA sending the QoS data; the retry count may be accumulated from the transmission to the AP1; and the lifetime of the QoS data frame is also timed since the STA sends the QoS data to the AP1.

Alternatively, as illustrated 2041 in FIG. 2, the MSDU timer starts upon the AP1 sending the QoS data to the STA; the retry count may be accumulated since the AP1 sends the QoS data to the STA; and the lifetime of the QoS data frame is also timed since the AP1 sends the QoS data to the STA.

The transmission parameter restarts counting after the STA transitions from the first AP to the second AP. As illustrated in 1042 in FIG. 1, the transmission parameter is reset to zero and restarts counting. That is, the MSDU timer is reset to zero and restarts calculation since the STA sends the QoS data to the AP2; the retry count is reset to zero and restarts accumulation since the STA sends the QoS data to the AP2; and the lifetime of the QoS data frame is also reset to zero and restarts accumulation since the STA sends the QoS data to the AP2.

Alternatively, as illustrated in 2042 in FIG. 2, the MSDU timer is reset to zero and restarts calculation since the AP1 sends the QoS data to the STA; the retry count is reset to zero and restarts calculation since the AP2 sends the QoS data to the STA; and the lifetime of the QoS data frame is also reset to zero and restarts timing.

Optionally, in an embodiment of the present disclosure, the transmission parameter includes a retry count of the QoS data frame, a count of a MSDU timer, and/or a lifetime of the QoS data frame.

Herein, the retry count represents the number of retries of the QoS data frame. For example, a preset retry count threshold for the QoS data frame may be 5. When the retry count is below 5, the AP2 buffers the received QoS data, and when the retry count reaches 5, the AP2 may discard the buffered QoS data.

For example, the MSDU timer starts counting when the MSDU is transmitted to the MAC layer. For example, the count threshold of the MSDU timer may be a value specified in the dot11 EDCA Table MSDU Lifetime parameter, and if the transmission MSDU timer reaches the dot11 EDCA Table MSDU Lifetime, the MSDU (QoS data) or any undelivered segments of that MSDU may be discarded.

For example, the lifetime of the QoS data frame records the lifetime duration of the QoS data frame, and it may be for example 50 milliseconds. Timing starts upon transmission initiation of the QoS data frame, and if it exceeds the lifetime duration of the QoS data frame, the AP2 may discard the buffered QoS data.

In the embodiments of the present disclosure, the sending end resends the QoS data frame after the STA transitions from the first AP to the second AP, in which the transmission parameter accumulates the transmission parameter used before the STA transitions from the first AP to the second AP, or restarts counting after the STA transitions from the first AP to the second AP; and receives the QoS data frame based on the transmission parameter. The embodiments of the present disclosure provide a method for transmitting a QoS data frame which supports STA transitioning and meets transmission requirements of UHR.

Referring to FIG. 5, an embodiment of the present disclosure provides a method for transmitting a QoS data frame applied to a first AP. The first AP is an AP communicating with an STA before the transitioning of the STA. The method includes:

step 501, after a station (STA) transitions from a first AP to a second AP, sending a transmission parameter used before the transitioning of the STA to a receiving end of the QoS data frame, to instruct the receiving end to determine a transmission parameter of the QoS data frame based on the transmission parameter used before the transitioning, and to receive the QoS data frame.

The transmission parameter of the QoS data frame accumulates the transmission parameter used before the transitioning. As illustrated in 1041 in FIG. 1, the transmission parameter accumulates the transmission parameter 1 used prior to the STA transitioning from the AP1 to the AP2. For example, the MSDU timer starts upon the STA sending the QoS data; the retry count may be accumulated from the transmission to the AP1; and the lifetime of the QoS data frame is also timed since the STA sends the QoS data to the AP1.

Alternatively, as illustrated 2041 in FIG. 2, the MSDU timer starts upon the AP1 sending the QoS data to the STA; the retry count may be accumulated since the AP1 sends the QoS data to the STA; and the lifetime of the QoS data frame is also timed since the AP1 sends the QoS data to the STA.

In the embodiments of the present disclosure, after the STA transitions from the first AP to the second AP, the first AP sends the transmission parameter used before the transitioning of the STA to the receiving end of the QoS data frame, to instruct the receiving end to determine the transmission parameter of the QoS data frame based on the transmission parameter used before the transitioning, and to receive the QoS data frame. The embodiments of the present disclosure provide a method for transmitting a QoS data frame which supports STA transitioning and meets transmission requirements of UHR.

Referring to FIG. 6, based on the same principle as the method provided in the embodiments of the present disclosure, an embodiment of the present disclosure further provides an electronic device. The electronic device is a receiving end, and includes:
a determining module 601, configured to determine a transmission parameter of a QoS data frame, wherein the transmission parameter accumulates a transmission parameter used before a station (STA) transitions from a first AP to a second AP, or restarts counting after the STA transitions from the first AP to the second AP; and
a receiving module 602, configured to receive the QoS data frame based on the transmission parameter.

An embodiment of the present disclosure further provides a device for transmitting a QoS data frame, which is applied to a receiving end, and includes:
a parameter determining module, configured to determine a transmission parameter of a QoS data frame, wherein the transmission parameter accumulates a transmission parameter used before a station (STA) transitions from a first AP to a second AP, or restarts counting after the STA transitions from the first AP to the second AP; and
a data receiving module, configured to receive the QoS data frame based on the transmission parameter.

Referring to FIG. 7, based on the same principle as the method provided in the embodiments of the present disclosure, an embodiment of the present disclosure further provides an electronic device. The electronic device is a sending end, and includes:
a transmitting module 701, configured to resend a QoS data frame after a station (STA) transitions from a first AP to a second AP, wherein a transmission parameter of the QoS data frame accumulates a transmission parameter used before the STA transitions from the first AP to the second AP, or restarts counting after the STA transitions from the first AP to the second AP.

An embodiment of the present disclosure further provides a device for transmitting a QoS data frame, which is applied to a sending end, and includes:
a data transmitting module, configured to resend a QoS data frame after a station (STA) transitions from a first AP to a second AP, wherein a transmission parameter of the QoS data frame accumulates a transmission parameter used before the STA transitions from the first AP to the second AP, or restarts counting after the STA transitions from the first AP to the second AP.

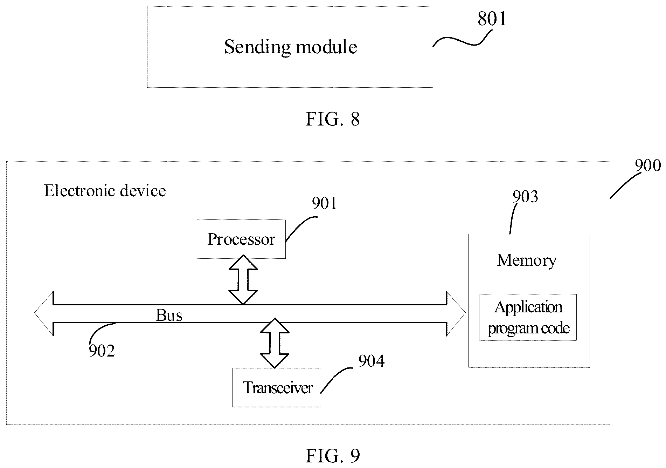

Referring to FIG. 8, based on the same principle as the method provided in the embodiments of the present disclosure, an embodiment of the present disclosure further provides an electronic device. The electronic device is a first AP, and includes:
a sending module 801, configured to, after a station (STA) transitions from a first AP to a second AP, send a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

An embodiment of the present disclosure further provides a device for transmitting a QoS data frame, which is applied to a first AP, and includes:
a parameter sending module, configured to, after a station (STA) transitions from a first AP to a second AP, send a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

In an optional embodiment, an embodiment of the present disclosure further provides an electronic device, and as shown in FIG. 9, the electronic device 900 shown in FIG. 9 may be a server, which includes a processor 901 and a memory 903. The processor 901 and the memory 903 are connected, e.g., via a bus 902. Optionally, the electronic device 900 may also include a transceiver 904. It is to be noted that in practical application, the number of the transceiver 904 is not limited to one, and the structure of the electronic device 900 does not limit the embodiments of the present disclosure.

The processor 901 may be a CPU (Central Processing Unit), a general-purpose processor, a DSP (Digital Signal Processor), an ASIC (Application Specific Integrated Circuit), FPGA (Field Programmable Gate Array) or other programmable logic device, a transistor logic device, a hardware component, or any combination thereof. It may implement or execute various exemplary logic blocks, modules, and circuits described in conjunction with the present disclosure. The processor 901 may also be a combination that implements computing functions, such as a combination including one or more microprocessor, a combination of a DSP and a microprocessor, and the like.

The bus 902 may include a path for transferring information between the components described above. The bus 902 may be a PCI (Peripheral Component Interconnect) bus, an EISA (Extended Industry Standard Architecture) bus or the like. The bus 902 may be divided into an address bus, a data bus, a control bus or the like. For ease of representation, only one thick line is shown in FIG. 9, which however does not mean that there is only one bus or one type of bus.

The memory 903 may be a ROM (Read Only Memory) or other type of static memory device that can store static information and instructions, and a RAM (Random Access Memory) or other type of dynamic memory device that can store information and instructions, or may also be an EEPROM (Electrically Erasable Programmable Read Only Memory), CD-ROM (Compact Disc Read Only Memory) or other optical disk storage, optical disc storage (including compressed optical discs, laser discs, compact discs, digital general purpose discs, Blu-ray discs, etc.), magnetic disk storage media, other magnetic storage devices, or any other media capable of carrying or storing expected program codes having instruction or data structure form and capable of being accessed by a computer, which is not specifically limited herein.

The memory 903 is used to store application program codes for executing the solution of the present disclosure and is controlled and executed by processor 901. The processor 901 is used to execute the application program codes stored in the memory 903 to implement that shown in the above method embodiments.

The electronic device includes, but is not limited to: a mobile terminal such as a mobile phone, a laptop computer, a digital broadcast receiver, a PDA (personal digital assistant), a PAD (portable Android device), a PMP (portable multimedia player), an in-vehicle terminal (such as in-vehicle navigation terminal), or the like; and a fixed terminal such as a digital TV, a desktop computer, or the like. The electronic device shown in FIG. 9 is merely an example and should not impose any limitation on the functionality and application scope of the embodiments of the present disclosure.

The server provided in the present disclosure may be a standalone physical server, may be a server cluster or a distributed system formed by a plurality of physical servers, or may also be a cloud server providing basic cloud computing services such as cloud services, cloud databases, cloud computation, cloud functions, cloud storage, network services, cloud communications, middleware services, domain name services, security services, CDNs, and big data and artificial intelligence platforms. The terminals may be smartphones, tablets, laptops, desktop computers, smart speakers, smart watches, and the like, but are not limited thereto. The terminal and the server may be connected directly or indirectly via wired or wireless communication, which is not limited in the present disclosure.

An embodiment of the present disclosure provides a computer-readable storage medium having a computer program stored thereon which, when runs on a computer, enables the computer to execute that in the above method embodiments.

It is to be understood that although the individual steps in the flowchart of the accompanying drawings are shown in sequence as indicated by the arrows, the steps are not necessarily executed sequentially in the order indicated by the arrows. Unless expressly stated herein, the execution of these steps is not strictly limited in order, and they may be executed in other orders. Moreover, at least a portion of the steps in the flowchart of the accompanying drawings may include a plurality of sub-steps or a plurality of phases, which are not necessarily executed or completed at the same moment but may be executed at different moments, and they may not be executed sequentially, but may be executed in turn or alternately with the other steps or at least a portion of sub-steps or phases of the other steps.

It is to be noted that the computer-readable medium described above in the present disclosure may be a computer-readable signal medium or a computer-readable storage medium or any combination thereof. The computer-readable storage medium may be but is not limited to for example a system, device, or element of electricity, magnetism, light, electromagnetism, infrared ray, or semiconductor, or any combination thereof. More specific examples of the computer-readable storage media may include, but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction-executing system, device, or element. And in the present disclosure, the computer-readable signal medium may include a data signal propagated in a baseband or as part of a carrier carrying computer-readable program code. Such propagated data signals may take a variety of forms, including, but not limited to, electromagnetic signals, optical signals, or any suitable combination thereof. The computer-readable signal medium may also be any computer-readable medium other than the computer-readable storage medium that may send, propagate, or transmit a program for use by or in conjunction with an instruction-executing system, device, or element. The program code contained on the computer-readable medium may be transmitted using any suitable medium, including, but not limited to: wire, optical cable, RF (Radio Frequency), or the like, or any suitable combination thereof.

The above computer-readable medium may be contained in the above electronic device; or may exist separately and not be assembled into the electronic device.

The above computer-readable medium carries one or more programs that, when being executed by the electronic device, cause the electronic device to perform the method in the above embodiments.

According to an aspect of the present disclosure, there is provided a computer program product or computer program including computer instructions which are stored in a computer-readable storage medium. A processor of a computer device reads the computer instructions from the computer-readable storage medium, and the processor executes the computer instructions such that the computer device performs the method provided in the various optional implementations described above.

The computer program code for performing the operations of the present disclosure may be written in one or more programming languages or combinations thereof, including object-oriented programming languages - such as Java, Smalltalk, C++ - and conventional procedural programming languages - such as the 'C' language or similar programming languages. The program code may be executed entirely on a user computer, executed partially on the user computer, executed as a stand-alone software package, executed partially on the user computer and partially on a remote computer, or executed entirely on a remote computer or server. In the case of the remote computer, the remote computer may be connected to the user computer via any kind of network, including a local area network (LAN) or a wide area network (WAN), or may be connected to an external computer (e.g., by using the Internet of an Internet service provider).

The flowcharts and block diagrams in the accompanying drawings illustrate the system architecture, functionality, and operation that may be implemented by the systems, methods, and computer program products according to various embodiments of the present disclosure. In this regard, each block in the flowcharts or block diagrams may represent a module, program segment, or portion of code that contains one or more executable instructions for implementing a specified logical function. It is also to be noted that in some alternative implementations, the functions indicated in the blocks may also occur in a different order than that indicated in the accompanying drawings. For example, two consecutively represented blocks may actually be executed substantially in parallel, and they may sometimes be executed in a reverse order, depending on the function involved. It is also to be noted that each block in the block diagrams and/or flowcharts, and a combination of the blocks in the block diagrams and/or flowcharts, may be implemented with a dedicated hardware-based system that performs a specified function or operation, or may be implemented with a combination of dedicated hardware and computer instructions.

The modules involved in the description of the embodiments of the present disclosure may be implemented by way of software or may be implemented by way of hardware. The name of a module does not constitute a limitation on the module in some cases, for example, a module A may also be described as "a module A for performing an operation B".

The above description is only a preferred embodiment of the present disclosure and an illustration of the technical principle applied. A person skilled in the art should understand that the scope of the present disclosure is not limited to a technical solution formed by a particular combination of the above-described technical features, but also covers other technical solutions formed by any combination of the above-described technical features or their equivalents without departing from the above-described concept of the present disclosure, for example, a technical solution formed by replacing the above features with technical features having similar functions to that disclosed in the present disclosure (which however not limited thereto).

## Claims

1. A method for transmitting a Quality of Service, QoS, data frame applied to a receiving end, comprising:
determining a transmission parameter of the QoS data frame, wherein the transmission parameter accumulates a transmission parameter used before a station, STA, transitions from a first AP to a second AP, or restarts counting after the STA transitions from the first AP to the second AP; and
receiving the QoS data frame based on the transmission parameter.

2. The method for transmitting the QoS data frame according to claim 1, wherein the transmission parameter comprises a retry count of the QoS data frame, a count of a MSDU timer, and/or a lifetime of the QoS data frame.

3. The method for transmitting the QoS data frame according to claim 1 or 2, wherein the transmission parameter accumulates the transmission parameter used before the STA transitions from the first AP to the second AP, and
determining the transmission parameter of the QoS data frame comprises:
receiving, from the first AP, a parameter used before the STA transitions from the first AP to the second AP.

4. The method for transmitting the QoS data frame according to claim 2, wherein receiving the QoS data frame based on the transmission parameter comprises:
discarding the QoS data frame when the retry count exceeds a preset retry count threshold, the count of the MSDU timer exceeds a preset timer count threshold, and/or the lifetime of the QoS data frame exceeds a lifetime threshold.

5. The method for transmitting the QoS data frame according to claim 1, wherein:
the QoS data frame comprises an uplink QoS data frame, and the receiving end comprises the second AP; or
the QoS data frame comprises a downlink QoS data frame, and the receiving end comprises the STA.

6. A method for transmitting a QoS data frame applied to a sending end, comprising:
resending a QoS data frame after a station, STA, transitions from a first AP to a second AP, wherein a transmission parameter of the QoS data frame accumulates a transmission parameter used before the STA transitions from the first AP to the second AP, or restarts counting after the STA transitions from the first AP to the second AP.

7. The method for transmitting the QoS data frame according to claim 6, wherein the transmission parameter comprises a retry count of the QoS data frame, a count of a MSDU timer, and/or a lifetime of the QoS data frame.

8. The method for transmitting the QoS data frame according to claim 6, wherein:
the QoS data frame comprises an uplink QoS data frame, and the sending end comprises the STA; or
the QoS data frame comprises a downlink QoS data frame, and the sending end comprises the second AP.

9. A method for transmitting a QoS data frame applied to a first AP, comprising:
after a station, STA, transitions from a first AP to a second AP, sending a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

10. An electronic device which is a receiving end, wherein the electronic device comprises:
a determining module, configured to determine a transmission parameter of a QoS data frame, wherein the transmission parameter accumulates a transmission parameter used before a station, STA, transitions from a first AP to a second AP, or restarts counting after the STA transitions from the first AP to the second AP; and
a receiving module, configured to receive the QoS data frame based on the transmission parameter.

11. An electronic device which is a sending end, wherein the electronic device comprises:
a transmitting module, configured to resend a QoS data frame after a station, STA, transitions from a first AP to a second AP, wherein a transmission parameter of the QoS data frame accumulates a transmission parameter used before the STA transitions from the first AP to the second AP, or restarts counting after the STA transitions from the first AP to the second AP.

12. An electronic device which is a first AP, wherein the electronic device comprises:
a sending module, configured to, after a station, STA, transitions from a first AP to a second AP, send a transmission parameter used before the transitioning of the STA to a receiving end of the QoS data frame, to instruct the receiving end to determine a transmission parameter of the QoS data frame based on the transmission parameter used before the transitioning, and to receive the QoS data frame,
wherein the transmission parameter of the QoS data frame accumulates the transmission parameter used before the transitioning.

13. An electronic device comprising a memory, a processor, and a computer program stored on the memory and executable on the processor, wherein the processor, when executing the program, implements the method according to any one of claims 1 to 5, 6 to 8, or 9.

14. A computer-readable storage medium having a computer program stored thereon, wherein the computer program, when executed by a processor, implements the method according to any one of claims 1 to 5, 6 to 8, or 9.
